# EUROPÄISCHE PATENTSCHRIFT

(11) **EP 3 693 703 B1**
(45) Veröffentlichungstag und Bekanntmachung des Hinweises auf die Patenterteilung: **14.09.2022**
(21) Anmeldenummer: 20153392.4
(22) Anmeldetag: 23.01.2020
(51) Int. Cl.: G01C 21/32, G01C 21/20, G01C 21/00, G06K 9/00, G06V 20/56

(54) **POSITIONSBESTIMMUNGSSYSTEM**
POSITION DETERMINATION SYSTEM
SYSTÈME DE DÉTERMINATION DE LA POSITION

(30) Priorität: 11.02.2019 DE 102019103344
(43) Veröffentlichungstag der Anmeldung: 12.08.2020
(73) Patentinhaber: SICK AG, 79183 Waldkirch (DE)
(72) Erfinder: BEINSCHOB, Patric, 22043 Hamburg (DE)
(74) Vertreter: Manitz Finsterwald Patent- und Rechtsanwaltspartnerschaft mbB

(56) Entgegenhaltungen:
- DE-A1-102017 005 020
- HELEN OLEYNIKOVA ET AL: "Signed Distance Fields: A Natural Representation for Both Mapping and Planning", RSS 2016 WORKSHOP: GEOMETRY AND BEYOND - REPRESENTATIONS, 1. Januar 2016 (2016-01-01), XP055708900, DOI: 10.3929/ethz-a-010820134
- Vito Cappellini ET AL: "Image data compression by the discrete cosine transform", , 1. Januar 1985 (1985-01-01), XP055710329, Gefunden im Internet: URL:https://flore.unifi.it/retrieve/handle /2158/360672/339970/Image%20data%20compres sion%20by%20the%20discrete%20cosine%20tran sform%201.pdf [gefunden am 2020-06-30]

## Beschreibung

Die vorliegende Erfindung betrifft ein Positionsbestimmungssystem zur Bestimmung einer Position eines in einer Umgebung beweglichen Geräts, ein Umgebungssensorsystem für ein in einer Umgebung bewegliches Gerät, sowie ein bewegliches Gerät mit einem Umgebungssensorsystem.

Ein in einer Umgebung bewegliches Gerät kann beispielsweise ein Fahrzeug oder ein Flugzeug sein. Positionsbestimmungssysteme zur Bestimmung einer Position eines derartigen Geräts sind in der Regel dazu ausgebildet, die Position des Geräts durch einen Vergleich von Messwerten eines Umgebungssensors des Geräts mit einer Umgebungskarte zu ermitteln. Derartige Positionsbestimmungssysteme werden in der Regel dazu verwendet, das bewegliche Gerät automatisiert durch die Umgebung zu steuern und anhand der ermittelten Position des Geräts eine Positions- oder Lageregelung auszuführen. Dabei bestimmen die Genauigkeit und Geschwindigkeit, mit der die Position des Geräts bestimmt werden kann, maßgeblich die bei der Steuerung des Geräts erzielbaren Genauigkeiten und Geschwindigkeiten. Um eine schnelle und sichere Bestimmung der Position des Geräts zu ermöglichen, sollte die Umgebungskarte speichereffizient in einer Speichereinheit hinterlegt und gleichzeitig mit geringen Zugriffszeiten aus der Speichereinheit ausgelesen werden können.

Ist das Gerät in der Umgebung lediglich in einer Ebene beweglich, handelt es sich bei dem Gerät beispielsweise um ein in einem Stockwerk eines Gebäudes bewegliches Fahrzeug, so kann die Positionsbestimmung grundsätzlich in zwei Dimensionen und auf Grundlage einer zweidimensionalen Umgebungskarte erfolgen. Derartige zweidimensionale Umgebungskarten können in der Regel ein die Umgebung vollständig abdeckendes Gitter von Kartenwerten umfassen, ohne dass der zum Hinterlegen und Auslesen der Kartenwerte benötigte Ressourcenbedarf die Geschwindigkeit oder Genauigkeit der Positionsbestimmung einschränkt.

Ein bewegliches Gerät, etwa ein Fahrzeug, mit einem zweidimensionalen Positionsbestimmungssystem kann jedoch nicht ohne weiteres in Umgebungen eingesetzt werden, in denen eine dreidimensionale Lageänderung des Geräts möglich ist. Bei einer dreidimensionalen Lageänderung liefert nämlich ein Vergleich der nach der Lageänderung gewonnen Messwerte des Umgebungssensors mit den lediglich zweidimensionalen Kartenwerten keine plausiblen Ergebnisse mehr. Dreidimensionale Lageänderungen erfolgen insbesondere beim Befahren einer Rampe oder bei Nick- oder Wankbewegungen des Geräts, etwa beim Überfahren von Bodenunebenheiten.

Um ein Fahrzeug mit einem zweidimensionalen Positionsbestimmungssystem dennoch in mehr als einer Ebene automatisiert bewegen zu können, werden die Bewegungen in den einzelnen Ebenen in der Regel dadurch entkoppelt, dass das Fahrzeug ohne Bestimmung der Position zwischen den Ebenen bewegt wird, etwa in einem Aufzug. Während des Übergangs von einer Ebene zur anderen können dann die zur Positionsbestimmung verwendeten Karten der einzelnen Ebenen ausgetauscht werden. Im Vergleich zu einer Rampe ermöglicht jedoch ein Aufzug nur einen geringeren Durchsatz an Fahrzeugen. Nick- oder Wankbewegungen eines Fahrzeugs mit einem zweidimensionalen Positionsbestimmungssystem führen in der Regel dazu, dass aufgrund der unbestimmbaren Lage des Fahrzeugs ein Nothalt des Fahrzeugs ausgeführt wird und der Betrieb des Fahrzeugs erst wieder aufgenommen wird, wenn die Bewegungen abgeklungen sind und das Fahrzeug wieder eine neutrale Lage gegenüber der Bewegungsebene eingenommen hat. Ein derartiger Nothalt verlangsamt das Fahrzeug und führt zu unerwünschtem Verschleiß an Fahrzeug und Fahrfläche.

Es besteht daher das Bedürfnis, auch lediglich in einer Ebene bewegliche Geräte mit einem dreidimensionalen Positionsbestimmungssystem auszustatten. Eine Hinterlegung dreidimensionaler Kartenwerte ist jedoch aufgrund des dafür benötigten Ressourcenbedarfs oftmals nicht möglich.

Die Druckschrift DE 10 2017 005 020 A1 beschreibt ein Verfahren zur Ermittlung einer Position eines Fahrzeugs in einer Fahrzeugumgebung, bei dem eine Position des Fahrzeugs innerhalb einer Fahrspur einer von dem Fahrzeug befahrenen Fahrbahn mittels eines Abgleichs zwischen Begrenzungskoordinaten der Fahrspur und Positionsdaten des Fahrzeugs ermittelt wird. Der Fachartikel: HELEN OLEYNIKOVA ET AL: "Signed Distance Fields: A Natural Representation for Both Mapping and Planning", RSS 2016 WORKSHOP: GEOMETRY AND BEYOND - REPRESENTATIONS, 1. Januar 2016 beschreibt allgemein die Verwendung von *signed distance fields* zur Darstellung von Karten in der Robotik. Der Fachartikel Vito Cappellini ET AL: "Image data compression by the discrete cosine transform", Mathematics and Computers in Simulation, pp. 599 - 608, North-Holland, 1985 beschreibt die Anwendung der diskreten Cosinustransformation in der digitalen Bildverarbeitung.

Es ist Aufgabe der Erfindung, ein Positionsbestimmungssystem für ein bewegliches Gerät, ein Umgebungssensorsystem für ein bewegliches Gerät, sowie ein bewegliches Gerät derart anzugeben, dass eine Position des Geräts möglichst schnell und genau bestimmt werden kann.

Diese Aufgabe wird durch ein Positionsbestimmungssystem, ein Umgebungssensorsystem, sowie ein bewegliches Gerät gemäß den unabhängigen Ansprüchen gelöst. Weiterbildungen sind jeweils in den abhängigen Ansprüchen angegeben.

Ein Positionsbestimmungssystem zur Bestimmung einer Position eines in einer Umgebung beweglichen Geräts umfasst eine Positionsbestimmungseinheit und eine Speichereinheit. In der Speichereinheit ist eine Umgebungskarte der Umgebung hinterlegt. Die Positionsbestimmungseinheit ist dazu eingerichtet, Abstandsmesswerte eines Umgebungssensors des beweglichen Geräts zu empfangen und die Position des beweglichen Geräts durch ein Vergleichen der Abstandsmesswerte mit der Umgebungskarte zu bestimmen. Die hinterlegte Umgebungskarte umfasst mindestens einen Block, wobei der Block eine Anordnung von die Umgebung darstellenden Kartenwerten umfasst und wobei die Kartenwerte Abstandswerte zu einem Rand der Umgebung repräsentieren. Der Block der Umgebungskarte ist in der Speichereinheit als Koeffizienten einer Kombination, beispielsweise einer Linearkombination, von Basisfunktionen hinterlegt, wobei die Kombination/Linearkombination der Basisfunktionen die Kartenwerte des Blocks approximiert.

Im Rahmen der Erfindung wurde erkannt, dass die Umgebungskarte speichereffizient in der Speichereinheit hinterlegt werden kann, wenn als Kartenwerte Abstandswerte zu dem Rand der Umgebung hinterlegt werden und zugleich die Kartenwerte mittels der Koeffizienten der die Kartenwerte approximierenden Linearkombination hinterlegt werden. Zur Approximation der Kartenwerte werden nämlich in der Regel deutlich weniger Koeffizienten benötigt, als Kartenwerte in dem Block vorhanden sind.

Zur Erstellung der Umgebungskarte kann die Umgebung in Raumelemente, insbesondere in eine regelmäßige Anordnung von Raumelementen, unterteilt sein und der Block kann ein derartiges Raumelement repräsentieren. Bei einer zweidimensionalen Umgebungskarte können die Raumelemente Flächenelementen, beispielsweise rechteckigen, insbesondere quadratischen Flächenelementen, und bei einer dreidimensionalen Umgebungskarte können die Raumelemente Volumenelementen, beispielsweise quaderförmigen, insbesondere würfelförmigen Volumenelementen, entsprechen. Die die Umgebung darstellenden Kartenwerte können in dem Block insbesondere regelmäßig, etwa auf einem Gitter, angeordnet sein und regelmäßig, etwa gitterförmig, angeordnete Raumpunkte der Raumelemente der Umgebung repräsentieren.

Die Kartenwerte können insbesondere als Funktionswerte einer vorzeichenbehafteten Abstandsfunktion *(signed distance function,* SDF) hinterlegt sein. Dabei geben die einzelnen Kartenwerte jeweils den kürzesten Abstand des durch die Kartenwerte jeweils repräsentierten Raumpunkts zu dem Rand der Umgebung (z.B. einer Wand) an. Die Kartenwerte weisen dabei unterschiedliche Vorzeichen auf, je nachdem, ob die durch die Kartenwerte repräsentierten Raumpunkte innerhalb oder außerhalb der Umgebung angeordnet sind. Der Rand der Umgebung kann einen oder mehrere in sich geschlossene Randabschnitte umfassen. Beispielsweise kann ein derartiger Randabschnitt durch eine äußere Umrandung der Umgebung vorgegeben sein und ein weiterer derartiger Randabschnitt kann eine innerhalb der Umrandung angeordnete Aussparung der Umgebung, etwa eine um eine Säule oder ein Regal einer Produktionshalle angeordnete Aussparung, umfassen.

Ist das bewegliche Gerät als Fahrzeug ausgebildet, kann die Umgebung durch einen Fahrbereich des Fahrzeugs gebildet werden oder einen Fahrbereich des Fahrzeugs umfassen. Der Fahrbereich kann beispielsweise eine Halle, insbesondere eine Produktions- oder Lagerhalle sein. Das Fahrzeug kann dazu ausgebildet sein, sich in der Umgebung dreidimensional zu bewegen. Insbesondere kann die Umgebung einen durch das Fahrzeug befahrbaren geneigten Abschnitt, etwa einer Rampe umfassen. Die Umgebung kann auch mehrere übereinander angeordnete und durch das Fahrzeug befahrbare Ebenen umfassen.

Neben dem Block kann die Umgebungskarte weitere derartige Blöcke umfassen. Die Blöcke können nebeneinander angeordnet sein und die Umgebung ausfüllen. Die Blöcke können insbesondere regelmäßig nebeneinander angeordnet sein und jeweils eine Anordnung, insbesondere eine regelmäßige Anordnung, von Kartenwerten der durch die Blöcke jeweils repräsentierten Raumelemente der Umgebung umfassen. Dabei können in der Speichereinheit die Kartenwerte aller Blöcke der Umgebungskarte hinterlegt sein. Die Kartenwerte der einzelnen Blöcke sind dann jeweils dadurch hinterlegt, dass für die einzelnen Blöcke jeweils Koeffizienten derjenigen Linearkombination der Basisfunktionen hinterlegt sind, die die Kartenwerte des betreffenden Blocks approximiert.

Die durch die Linearkombination der Basisfunktionen des Blocks approximierten Kartenwerte bilden ein mehrdimensionales Feld von Kartenwerten, insbesondere können sie ein zweidimensionales oder ein dreidimensionales Feld von Kartenwerten bilden. Die Basisfunktionen können beispielsweise mehrdimensionale, insbesondere zweidimensionale oder dreidimensionale, Polynome, Basisfunktionen einer mehrdimensionalen, insbesondere zweidimensionalen oder dreidimensionalen, diskreten Cosinustransformation *(discrete cosine transformation,* DCT) oder Basisfunktionen einer anderen geeigneten mehrdimensionalen, insbesondere zweidimensionalen oder dreidimensionalen, Transformation sein.

Die Linearkombinationen, mit denen die Kartenwerte der einzelnen Blöcke approximiert werden, können jeweils eine Anzahl von Basisfunktionen enthalten, welche eine Gesamtzahl der Kartenwerte der einzelnen Blöcke entspricht. Die einzelnen Blöcke können bei einer dreidimensionalen Umgebungskarte beispielswiese gitterförmig angeordnete Kartenwerte umfassen, wobei die Blöcke in allen drei Raumrichtungen jeweils 16 Kartenwerte umfassen. Insgesamt enthalten die einzelnen Blöcke dann jeweils 16³ Kartenwerte. Die Kartenwerte der einzelnen Blöcke können dann durch Linearkombinationen von 16³ Basisfunktionen approximiert werden, so dass in der Speichereinheit für jeden Block höchstens 16³ Koeffizienten der Linearkombination zu hinterlegen sind. Der Speicherplatz, der zur Hinterlegung der Blöcke der Umgebungskarte benötigt wird, kann jedoch auch dadurch reduziert werden, dass nicht alle Koeffizienten der einzelnen Linearkombinationen hinterlegt werden, sondern lediglich diejenigen Koeffizienten, deren Amplituden-bzw. Energiewerte jeweils einen vorgegebenen Schwellenwert überschreiten. Derartige Koeffizienten können auch als dominante Koeffizienten der Linearkombination bezeichnet werden. Insbesondere können pro Block jeweils nur maximal 3, 9 oder 27 Koeffizienten gespeichert werden.

Der Umgebungssensor kann als ein Distanzsensor (z.B. Laserscanner) ausgebildet sein und die Abstandswerte beispielsweise mittels des Laufzeitprinzips erfassen. Zum Erfassen der Abstandswerte kann der Umgebungssensor beispielsweise elektromagnetische Strahlung oder Ultraschall aussenden. Der Umgebungssensor kann auch als eine Kamera, insbesondere als eine TOF-Kamera (time-of-flight Kamera) ausgebildet sein.

Die Positionsbestimmungseinheit kann dazu ausgebildet sein, durch den Vergleich der Abstandsmesswerte mit der Umgebungskarte neben der Position des beweglichen Geräts auch eine Orientierung des beweglichen Geräts im Raum, insgesamt also eine Lage des beweglichen Geräts, zu bestimmen. Die Positionsbestimmungseinheit kann dazu eingerichtet sein, zur Bestimmung der Position bzw. der Lage des beweglichen Geräts die Abstandsmesswerte mit der Umgebungskarte mittels eines sogenannten Partikelfilters (sequenzieller Monte-Carlo-Filter, SMC-Filter) zu vergleichen. Dabei werden aus hypothetischen Lagen des Geräts mittels der hinterlegten Kartenwerte der Umgebungskarte hypothetische Messwerte vorhergesagt und die hypothetischen Messwerte mit den Abstandsmesswerten des Umfeldsensors verglichen. Aus derjenigen hypothetischen Lage, deren hypothetische Messwerte am besten mit den tatsächlich ermittelten Abstandsmesswerten übereinstimmen, wird anschließend die Position des beweglichen Geräts ermittelt. Eine derartige Lokalisierung des beweglichen Geräts kann auch als Monte-Carlo Lokalisierung (MCL) bezeichnet werden.

Die Positionsbestimmungseinheit kann als eine Logikeinheit, etwa als ein Mikrocontroller, FPGA oder ASIC und die Speichereinheit kann als ein an die Logikeinheit angebundener oder in die Logikeinheit integrierter Speicherbaustein ausgebildet sein. Die Positionsbestimmungseinheit kann insbesondere ein Steuerprogramm umfassen, in welchem Logikanweisungen zur Bestimmung der Position des beweglichen Geräts hinterlegt sind.

Bei einer Weiterbildung des Positionsbestimmungssystems umfasst die Umgebungskarte eine Mehrzahl nebeneinander angeordneter und die Umgebung ausfüllender Blöcke, wobei in der Speichereinheit nur Blöcke hinterlegt sind, durch die der Rand der Umgebung verläuft. Indem lediglich um den Rand der Umgebung, nicht jedoch in der gesamten Umgebung, angeordnete Blöcke in der Speichereinheit hinterlegt werden, verringert sich der zur Hinterlegung der Umgebungskarte benötigte Speicherbedarf und die Position des beweglichen Geräts kann besonders schnell und sicher bestimmt werden.

Die Blöcke können in der Speichereinheit mittels einer Hashfunktion adressierbar hinterlegt sein. Die Hashfunktion bildet dabei die räumlichen Koordinaten der Blöcke auf Speicheradressen der Speichereinheit ab. Repräsentieren die Blöcke Volumenelemente einer dreidimensionalen Umgebung, so kann das Hinterlegen der Blöcke in der Speichereinheit mittels der Hashfunktion auch als sogenanntes Voxel-Hashing beschrieben werden.

Bei einer Weiterbildung des Positionsbestimmungssystems ist eine Ausdehnung des Blocks mindestens doppelt so groß und höchstens zehnmal so groß, insbesondere höchstens oder genau fünfmal so groß, wie eine Streuung der Abstandsmesswerte des Umgebungssensors. Dadurch kann insbesondere dann, wenn lediglich die den Rand der Umgebung umgebenden Blöcke in der Speichereinheit hinterlegt sind, sichergestellt werden, dass die Ausdehnung der Blöcke groß genug ist, um auch bei streuenden Abstandsmesswerten eine zuverlässige Bestimmung der Position des beweglichen Geräts zu ermöglichen. Die Abstandsmesswerte können beispielsweise aufgrund elektronischen Rauschens oder aufgrund sich ändernder Umweltbedingungen um den eigentlichen Abstandswert streuen.

Bei einer Weiterbildung des Positionsbestimmungssystems werden die Basisfunktionen durch Basisfunktionen einer diskreten Cosinustransformation gebildet. Werden als Basisfunktionen Cosinusfunktionen verwendet, so lassen sich die Koeffizienten der zur Approximation der Kartenwerte verwendeten Linearkombination besonders leicht komprimieren. Außerdem kann sichergestellt werden, dass die Linearkombinationen der Basisfunktionen der einzelnen Blöcke jeweils in den Grenzen zwischen den Blöcken stetig sind.

Bei einer Weiterbildung des Positionsbestimmungssystems sind die Koeffizienten Erfindungsgemäß sind die Koeffizienten der Linearkombination in der Speichereinheit nur dann hinterlegt, wenn ihre Beträge vorgegebene Schwellenwerte überschreiten. Dadurch können die Koeffizienten der Linearkombinationen besonders speichereffizient und schnell auslesbar in der Speichereinheit hinterlegt werden und die Position des beweglichen Geräts kann besonders schnell und sicher bestimmt werden. Die Schwellenwerte können insbesondere im Rahmen einer sogenannten Quantisierungskodierung vorgegeben sein. Es können für alle Koeffizienten einheitliche Schwellenwerte vorgegeben sein. Es können aber auch jeweils unterschiedliche, individuelle Schwellenwerte für die einzelnen Koeffizienten vorgegeben sein.

Umfasst ein Block der Umgebungskarte 16³ Kartenwerte, so können beispielsweise die Raumrichtungen jeweils nur 3 Koeffizienten die vorgegebenen Schwellenwerte überschreiten. In diesem Fall sind für den Block anstelle von 16³ Koeffizienten lediglich neun Koeffizienten in der Speichereinheit hinterlegt.

Bei einer Weiterbildung des Positionsbestimmungssystems sind die Schwellenwerte für die einzelnen Koeffizienten individuell vorgegeben. Dadurch kann sichergestellt werden, dass nur diejenigen Koeffizienten in der Speichereinheit hinterlegt werden, deren zugeordnete Basisfunktionen zur Approximation der Kartenwerte üblicherweise benötigt werden. Sind den einzelnen Koeffizienten der Linearkombination räumliche Frequenzen zugeordnet, so können die Schwellenwerte für die einzelnen Koeffizienten derart vorgegeben sein, dass lediglich Koeffizienten hinterlegt werden, deren Frequenzen zur Approximation der Kartenwerte benötigt werden.

Bei einer Weiterbildung des Positionsbestimmungssystems sind die Koeffizienten in der Speichereinheit komprimiert hinterlegt. Dadurch ist der für die Hinterlegung der Koeffizienten benötigte Speicherplatz besonders gering und die Position beweglichen Geräts kann schnell und sicher bestimmt werden. Diese Koeffizienten können insbesondere verlustfrei komprimiert hinterlegt sein, beispielsweise mittels Lauflängenkodierung und/oder Huffman-Kodierung.

Eine Weiterbildung der Positionsbestimmungseinheit ist dazu ausgebildet, die Position des beweglichen Geräts basierend auf einem Gradienten der Linearkombination der Basisfunktionen zu bestimmen. Die Basisfunktionen sind dabei derart ausgebildet, dass die aus den Basisfunktionen gebildeten Linearkombinationen an einer Grenze zwischen dem Block und einem benachbarten Block stetig sind.

Die Position des beweglichen Elements kann, beispielsweise im Rahmen einer Monte-Carlo Lokalisierung, als diejenige Position bestimmt werden, in der es am Wahrscheinlichsten ist, dass der Umfeldsensor Messwerte erzeugt, die mit den gemessenen Abstandswerten identisch sind. Diese wahrscheinlichste Position kann aus der Menge aller hypothetischen Positionen des beweglichen Geräts unter Verwendung des aus der Linearkombination von Basisfunktionen bestimmten Gradienten bestimmt werden, beispielsweise mittels des sogenannten Gradientenverfahrens (Verfahren des steilsten Abstiegs). Der Gradient der Linearkombination kann auch dazu verwendet werden, die Umgebung oder Umgebungselemente der Umgebung, etwa den Rand der Umgebung, aus der Linearkombination der Basisfunktionen zu rekonstruieren. Mittels der rekonstruierten Umgebungselemente können im Rahmen einer Monte-Carlo Lokalisierung beispielsweise die hypothetischen Messwerte bestimmt werden.

Eine Weiterbildung der Positionsbestimmungseinheit ist dazu ausgebildet, die Position, insbesondere eine Lage, des beweglichen Geräts in einem dreidimensionalen Koordinatensystem der Umgebung zu bestimmen, wobei der Block ein Volumenelement der Umgebung mit einer dreidimensionalen Anordnung der Kartenwerte darstellt. Die Lage des beweglichen Geräts kann insbesondere in sechs Freiheitsgraden bestimmt werden, wobei drei Freiheitsgrade die Position und drei weitere Freiheitsgrade die Orientierung des beweglichen Geräts definieren.

Es wird ferner ein Umgebungssensorsystem für ein in einer Umgebung bewegliches Gerät angegeben mit einem Umgebungssensor und einem Positionsbestimmungssystem zur Bestimmung einer Position des beweglichen Geräts aus Abstandsmesswerten des Umgebungssensors. Das Umgebungssensorsystem kann insbesondere das erfindungsgemäße Positionsbestimmungssystem umfassen. Insoweit beziehen sich alle Weiterbildungen und Vorteile, die im Zusammenhang mit dem erfindungsgemäßen Positionsbestimmungssystem beschrieben werden, auch auf das Umgebungssensorsystem.

Bei einer Weiterbildung des Umgebungssensorsystems ist das Positionsbestimmungssystem in ein Gehäuse des Umgebungssensors integriert. Das Positionsbestimmungssystem ist dazu ausgebildet, die Position des beweglichen Geräts als Ausgabewert des Umgebungssensorsystems auszugeben. Dadurch kann das Positionsbestimmungssystem besonders einfach und platzsparend implementiert werden. Das Positionsbestimmungssystem kann insbesondere in einer Logikeinheit des Umgebungssensors implementiert sein. Das Positionsbestimmungssystem kann als ein in den Umgebungssensor eingebettetes System *(embedded system)* ausgebildet sein.

Es wird außerdem ein bewegliches Gerät, insbesondere ein fahrerloses Transportfahrzeug, mit einem erfindungsgemäßen Umgebungssensorsystem angegeben.

Die Erfindung wird nachfolgend anhand von Figuren erläutert. Dabei zeigen in jeweils schematischer Darstellung:
- Fig. 1: ein in einer Umgebung bewegliches Gerät;
- Fig. 2: ein Umgebungssensorsystem des beweglichen Geräts; und
- Fig. 3: eine Karte der Umgebung.

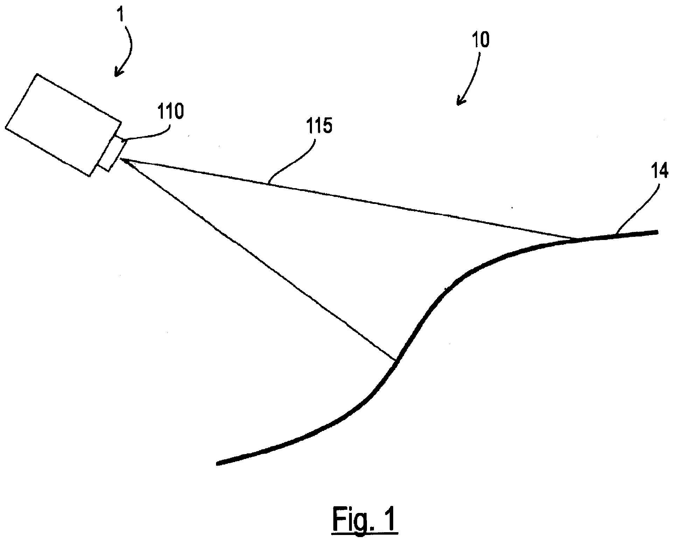

Fig. 1 zeigt ein in einer Umgebung 10 bewegliches Gerät 1. Das bewegliche Gerät 1 ist als ein fahrerloses Transportfahrzeug ausgebildet und umfasst einen Umgebungssensor 110. Der Umgebungssensor 110 ist als ein nach dem Laufzeitprinzip arbeitender Laserscanner ausgebildet und in einer Fahrtrichtung an einer Vorderseite des beweglichen Geräts 1 angeordnet.

Der Umgebungssensor 110 ist dazu ausgebildet, einen Rand 14 der Umgebung 10 abzutasten und Abstandsmesswerte, die einen Abstand zwischen dem beweglichen Gerät 1 und dem Rand 14 der Umgebung 10 repräsentieren, zu erzeugen. Der Umgebungssensor 110 ist dazu ausgebildet, den Rand 14 der Umgebung 10 in einem Erfassungsbereich 115 des Umgebungssensors 110 abzutasten. Der Erfassungsbereich 115 kann beispielsweise in einer Ebene angeordnet und parallel zu einer Bewegungsebene bzw. Fahrebene des beweglichen Geräts 1 orientiert sein.

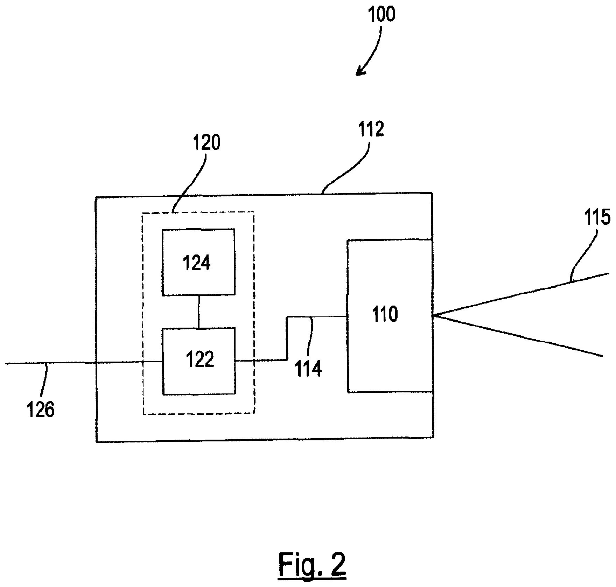

In Fig. 2 ist ein Umgebungssensorsystem 100 des beweglichen Geräts 1 dargestellt. Das Umgebungssensorsystem 100 umfasst den Umgebungssensor 110, sowie ein Positionsbestimmungssystem 120. Das Positionsbestimmungssystem 120 umfasst eine Positionsbestimmungseinheit 122, sowie eine mit der Positionsbestimmungseinheit 122 über eine Datenleitung verbundene Speichereinheit 124. Die Positionsbestimmungseinheit 122 ist über eine Datenleitung mit dem Umgebungssensor 110 verbunden, um die durch den Umgebungssensor 110 erzeugten Abstandsmesswerte 114 zu empfangen. Der Umgebungssensor 110 und das Positionsbestimmungssystem 120 sind in einem gemeinsamen Gehäuse 112 des Umgebungssensors 110 angeordnet. Dabei ist das Positionsbestimmungssystem 120 in einer Logikeinheit des Umgebungssensorsystems 100 implementiert.

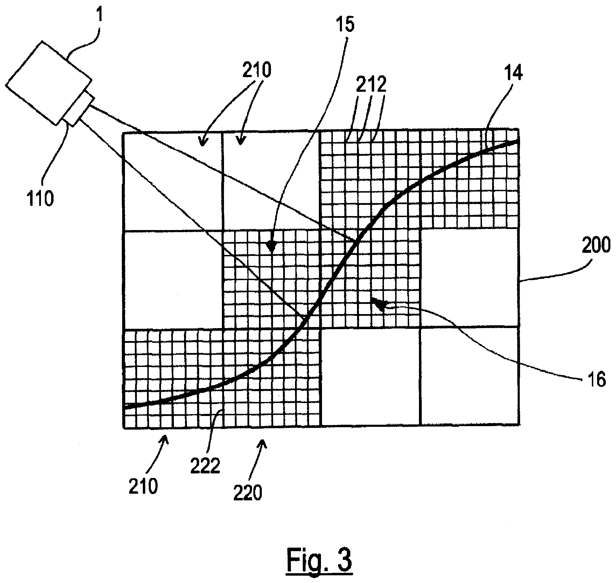

In der Speichereinheit 124 ist eine in Fig. 3 dargestellte Umgebungskarte 200 hinterlegt und die Positionsbestimmungseinheit 122 ist dazu eingerichtet, die Abstandsmesswerte 114 des Umgebungssensors 110 mit der Umgebungskarte 200 zu vergleichen, sowie aus dem Vergleich eine Position des beweglichen Geräts 1 zu ermitteln. Das Positionsbestimmungssystem 120 ist ferner dazu ausgebildet, die Position des beweglichen Geräts 1 als einen Ausgabewert 126 des Umgebungssensorsystems 100 auszugeben. Der die Position des beweglichen Geräts 1 repräsentierende Ausgabewert 126 wird an eine Steuerung des beweglichen Geräts 1 übertragen und die Steuerung ist dazu ausgebildet, die Position des beweglichen Geräts 1 mittels des Ausgabewert 126 zu steuern, insbesondere zu regeln.

Wie in Fig. 3 dargestellt ist, umfasst die Umgebungskarte 200 eine Mehrzahl regelmäßig nebeneinander angeordneter (virtueller) Blöcke 210. Die Blöcke 210 füllen die Umgebung 10 aus, wobei in Fig. 3 nur ein insgesamt zwölf der Blöcke 210 umfassender Ausschnitt der Umgebungskarte 200 dargestellt ist. Die Blöcke 210 umfassen jeweils eine regelmäßige Anordnung von Kartenwerten 212. In Fig. 3 sind lediglich die Kartenwerte 212 der in der Speichereinheit 124 hinterlegten Blöcke 210 dargestellt. Wie in Fig. 3 dargestellt ist, sind in der Speichereinheit 124 des Positionsbestimmungssystems 120 lediglich diejenigen Blöcke 210 hinterlegt, durch die der Rand 14 der Umgebung 10 verläuft.

Jeder der Kartenwerte 212 bildet einen Funktionswert einer vorzeichenbehafteten Abstandsfunktion der Umgebung 10, wobei die Abstandsfunktion in einem Inneren 15 der Umgebung 10 positive Funktionswerte und in einem Äußeren 16 der Umgebung 10 negative Funktionswerte annimmt. Die einzelnen Blöcke 210 sind dadurch in der Speichereinheit 124 hinterlegt, dass die Speichereinheit 124 für die einzelnen Blöcke 210 jeweils Koeffizienten von Linearkombinationen von Basisfunktionen umfasst, wobei die aus den Koeffizienten der einzelnen Blöcke 210 jeweils gebildeten Linearkombinationen jeweils die Kartenwerte 212 der betreffenden Blöcke 210 approximieren. Die Basisfunktionen sind in dem hier erläuterten Beispiel jeweils Basisfunktionen einer mehrdimensionalen, insbesondere einer zweidimensionalen, diskreten Cosinustransformation. Die aus den hinterlegten Koeffizienten gebildeten Linearkombinationen der Basisfunktionen sind jeweils an Grenzen 222 zwischen den Blöcken 210, insbesondere an einer Grenze 222 zwischen einem der Blöcke 210 und einem benachbarten Block 220, stetig.

Bei alternativen Ausführungsformen des Positionsbestimmungssystems 120 können die Blöcke 210 jeweils dreidimensionale Volumenelemente der Umgebung 10 repräsentieren und die Umgebungskarte 200 kann in einer zu Fig. 3 analogen Weise auch eine dreidimensionale Anordnung der Blöcke 210 umfassen. Beispielsweise kann die Umgebungskarte 200 über und unter der in Fig. 3 dargestellten Zeichenebene jeweils weitere Ebenen mit in einem dreidimensionalen Gitter regelmäßig angeordneten Kartenwerten 212 umfassen. Die Blöcke 210 einer derartigen Umgebungskarte 200 können als Koeffizienten einer Linearkombination von dreidimensionalen Basisfunktionen hinterlegt sein. Die dreidimensionalen Basisfunktionen können beispielsweise Basisfunktionen einer dreidimensionalen diskreten Cosinustransformation sein.

Die Koeffizienten der einzelnen Blöcke 210 sind jeweils an separaten Speicherplätzen der Speichereinheit 124 hinterlegt, wobei Adressen der Speicherplätze der einzelnen Blöcke 210 jeweils durch eine Hashfunktion vorgegeben sind. Die Hashfunktion bildet räumliche Koordinaten der einzelnen Blöcke 210 jeweils auf die den betreffenden Blöcken 210 zugeordneten Speicherplätze ab.

### Bezugszeichenliste

- 1: bewegliches Gerät
- 10: Umgebung
- 12: Umgebungselement
- 14: Rand
- 15: Inneres
- 16: Äußeres
- 100: Umgebungssensorsystem
- 110: Umgebungssensor
- 112: Gehäuse
- 114: Abstandsmesswerte
- 115: Erfassungsbereich
- 120: Positionsbestimmungssystem
- 122: Positionsbestimmungseinheit
- 124: Speichereinheit
- 126: Ausgabewert
- 200: Umgebungskarte
- 210: Block
- 212: Kartenwerte
- 216: Schwellenwerte
- 220: benachbarter Block
- 222: Grenze

## Patentansprüche

1. Positionsbestimmungssystem (120) zur Bestimmung einer Position eines in einer Umgebung (10) beweglichen Geräts (1),
mit einer Positionsbestimmungseinheit (122) und einer Speichereinheit (124),
wobei in der Speichereinheit (124) eine Umgebungskarte (200) der Umgebung (10) hinterlegt ist,
wobei die Positionsbestimmungseinheit (122) dazu eingerichtet ist, Abstandsmesswerte (114) eines Umgebungssensors (110) des beweglichen Geräts (1) zu empfangen,
wobei die Positionsbestimmungseinheit (122) dazu eingerichtet ist, die Position des beweglichen Geräts (1) durch ein Vergleichen der Abstandsmesswerte (114) mit der Umgebungskarte (200) zu bestimmen,
wobei die hinterlegte Umgebungskarte (200) mindestens einen Block (210) umfasst,
wobei der Block (210) eine Anordnung von die Umgebung (10) darstellenden Kartenwerten (212) umfasst,
wobei die Kartenwerte (212) Abstandswerte zu einem Rand (14) der Umgebung (10) repräsentieren,
wobei der Block (210) der Umgebungskarte (10) in der Speichereinheit (124) als Koeffizienten einer Linearkombination von Basisfunktionen hinterlegt ist, wobei die Linearkombination der Basisfunktionen die Kartenwerte (212) des Blocks (210) approximiert, und
wobei die Koeffizienten der Linearkombination in der Speichereinheit (124) nur dann hinterlegt sind, wenn ihre Beträge vorgegebene Schwellenwerte (216) überschreiten.

2. Positionsbestimmungssystem (120) nach Anspruch 1,
wobei die Umgebungskarte (200) eine Mehrzahl nebeneinander angeordneter und die Umgebung (10) ausfüllender Blöcke (210) umfasst,
wobei in der Speichereinheit (124) nur Blöcke (210) hinterlegt sind, durch die der Rand (14) der Umgebung (10) verläuft.

3. Positionsbestimmungssystem (120) nach einem der vorhergehenden Ansprüche,
wobei eine Ausdehnung des Blocks (210) mindestens doppelt so groß und höchstens zehnmal so groß, insbesondere fünfmal so groß, wie eine Streuung der Abstandsmesswerte (114) des Umgebungssensors (110) ist.

4. Positionsbestimmungssystem (120) nach einem der vorhergehenden Ansprüche,
wobei die Basisfunktionen durch Basisfunktionen einer diskreten Cosinustransformation gebildet werden.

5. Positionsbestimmungssystem (120) nach einem der vorhergehenden Ansprüche,
wobei die Schwellenwerte (216) für die einzelnen Koeffizienten individuell vorgegeben sind.

6. Positionsbestimmungssystem (120) nach einem der vorhergehenden Ansprüche,
wobei die Koeffizienten in der Speichereinheit (124) komprimiert hinterlegt sind.

7. Positionsbestimmungssystem (120) nach einem der vorhergehenden Ansprüche,
wobei die Positionsbestimmungseinheit (122) dazu ausgebildet ist, die Position des beweglichen Geräts (1) basierend auf einem Gradienten der Linearkombination der Basisfunktionen zu bestimmen,
wobei die Basisfunktionen derart ausgebildet sind, dass die aus den Basisfunktionen gebildeten Linearkombinationen an einer Grenze zwischen dem Block (210) und einem benachbarten Block (220) stetig sind.

8. Positionsbestimmungssystem (120) nach einem der vorhergehenden Ansprüche,
wobei die Positionsbestimmungseinheit (122) dazu ausgebildet ist, die Position, insbesondere eine Lage, des beweglichen Geräts (1) in einem dreidimensionalen Koordinatensystem der Umgebung (10) zu bestimmen,
wobei der Block (210) ein Volumenelement der Umgebung (10) mit einer dreidimensionalen Anordnung der Kartenwerte (212) darstellt.

9. Umgebungssensorsystem (10) für ein in einer Umgebung (10) bewegliches Gerät (1)
mit einem Umgebungssensor (110) und einem Positionsbestimmungssystem (120) zur Bestimmung einer Position des beweglichen Geräts (1) aus Abstandsmesswerten (114) des Umgebungssensors (110) nach einem der vorhergehenden Ansprüche.

10. Umgebungssensorsystem (100) nach Anspruch 9,
wobei das Positionsbestimmungssystem (120) in ein Gehäuse (112) des Umgebungssensors (110) integriert ist,
wobei das Positionsbestimmungssystem (120) dazu ausgebildet ist, die Position des beweglichen Geräts (1) als Ausgabewert (126) des Umgebungssensorsystems (100) auszugeben.

11. Bewegliches Gerät (1), insbesondere fahrerloses Transportfahrzeug, mit einem Umgebungssensorsystem (100) nach einem der Ansprüche 9 bis 10.

## Claims

1. A position determination system (120) for determining a position of a device (1) movable in an environment (10),
the position determination system (120) having a position determination unit (122) and a memory unit (124),
wherein an environmental map (200) of the environment (10) is stored in the memory unit (124);
wherein the position determination unit (122) is configured to receive measured distance values (114) of an environmental sensor (110) of the movable device (1);
wherein the position determination unit (122) is configured to determine the position of the movable device (1) by a comparison of the measured distance values (114) with the environmental map (200);
wherein the stored environmental map (200) comprises at least one block (210);
wherein the block (210) comprises an arrangement of map values (212) representing the environment (10);
wherein the map values (212) represent distance values from a margin (14) of the environment (10);
wherein the block (210) of the environmental map (10) is stored in the memory unit (124) as a coefficient of a linear combination of basis functions, with the linear combination of the basis functions approximating the map values (212) of the block (210); and
wherein the coefficients of the linear combination are only stored in the memory unit (124) when their amounts exceed predefined threshold values (216).

2. A position determination system (120) in accordance with claim 1,
wherein the environmental map (200) comprises a plurality of blocks (210) arranged next to one another and filling up the environment (10); and
wherein only blocks (210) through which the margin (14) of the environment (10) runs are stored in the memory unit (124).

3. A position determination system (120) in accordance with one of the preceding claims,
wherein an extent of the block (210) is at least twice as large, and at most ten times as large, in particular five times as large, as a scatter of the measured distance values (114) of the environmental sensor (110).

4. A position determination system (120) in accordance with any one of the preceding claims,
wherein the basis functions are formed by basis functions of a discrete cosine transformation.

5. A position determination system (120) in accordance with any one of the preceding claims,
wherein the threshold values (216) for the individual coefficients are individually predefined.

6. A position determination system (120) in accordance with any one of the preceding claims,
wherein the coefficients are stored in compressed form in the memory unit (124).

7. A position determination system (120) in accordance with any one of the preceding claims,
wherein the position determination unit (122) is configured to determine the position of the movable device (1) on the basis of a gradient of the linear combination of the basis functions; and
wherein the basis functions are configured such that the linear combinations formed from the basis functions are constant at a border between the block (210) and an adjacent block (220).

8. A position determination system (120) in accordance with any one of the preceding claims,
wherein the position determination unit (122) is configured to determine the position, in particular a location, of the movable device (1) in a three-dimensional coordinate system of the environment (10); and
wherein the block (210) represents a volume element of the environment (10) with a three-dimensional arrangement of the map values (212).

9. An environmental sensor system (10) for a device (1) movable in an environment (10),
the environmental sensor system (10) having an environmental sensor (110) and a position determination system (120) for determining a position of the movable device (1) from measured distance values (114) of the environmental sensor (110) in accordance with any one of the preceding claims.

10. An environmental sensor system (100) in accordance with claim 9,
wherein the position determination system (120) is integrated in a housing (112) of the environmental sensor (110),
wherein the position determination system (120) is configured to output the position of the movable device (1) as an output value (126) of the environmental sensor system (100).

11. A movable device (1), in particular an automated guided vehicle, having an environmental sensor system (100) in accordance with one of the claims 9 to 10.

## Revendications

1. Système de détermination de position (120) pour déterminer une position d'un appareil (1) mobile dans un environnement (10),
comprenant une unité de détermination de position (122) et une unité de mémoire (124),
dans lequel
une carte d'environnement (200) de l'environnement (10) est stockée dans l'unité de mémoire (124),
l'unité de détermination de position (122) est conçue pour recevoir des valeurs de mesure de distance (114) d'un capteur d'environnement (110) de l'appareil mobile (1),
l'unité de détermination de positon (122) est conçue pour déterminer la position de l'appareil mobile (1) en comparant les valeurs de mesure de distance (114) à la carte d'environnement (200),
la carte d'environnement (200) stockée comprend au moins un bloc (210), le bloc (210) comprend un agencement de valeurs cartographiques (212) représentant l'environnement (10),
les valeurs cartographiques (212) représentent des valeurs de distance par rapport à un bord (14) de l'environnement (10),
le bloc (210) de la carte de l'environnement (10) est stocké dans l'unité de mémoire (124) sous forme de coefficients d'une combinaison linéaire de fonctions de base,
la combinaison linéaire des fonctions de base effectue une approximation des valeurs cartographiques (212) du bloc (210), et
les coefficients de la combinaison linéaire ne sont stockés dans l'unité de mémoire (124) que si leurs valeurs absolues dépassent des valeurs seuils prédéfinies (216).

2. Système de détermination de position (120) selon la revendication 1,
dans lequel la carte d'environnement (200) comprend une pluralité de blocs (210) disposés les uns à côté des autres et remplissant l'environnement (10),
seuls les blocs (210) traversés par le bord (14) de l'environnement (10) sont stockés dans l'unité de mémoire (124).

3. Système de détermination de position (120) selon l'une des revendications précédentes,
dans lequel une extension du bloc (210) est au moins deux fois plus grande et au plus dix fois plus grande, en particulier cinq fois plus grande, qu'une dispersion des valeurs de mesure de distance (114) du capteur d'environnement (110).

4. Système de détermination de position (120) selon l'une des revendications précédentes,
dans lequel les fonctions de base sont formées par des fonctions de base d'une transformée en cosinus discrète.

5. Système de détermination de position (120) selon l'une des revendications précédentes,
dans lequel les valeurs seuils (216) pour les coefficients respectifs sont prédéfinies individuellement.

6. Système de détermination de position (120) selon l'une des revendications précédentes,
dans lequel les coefficients sont stockés dans l'unité de mémoire (124) sous forme comprimée.

7. Système de détermination de position (120) selon l'une des revendications précédentes,
dans lequel l'unité de détermination de position (122) est réalisée pour déterminer la position du dispositif mobile (1) en se basant sur un gradient de la combinaison linéaire des fonctions de base,
les fonctions de base sont conçues de telle sorte que les combinaisons linéaires formées à partir des fonctions de base sont continues à une limite entre ledit bloc (210) et un bloc adjacent (220).

8. Système de détermination de position (120) selon l'une des revendications précédentes,
dans lequel l'unité de détermination de position (122) est réalisée pour déterminer la position, en particulier une situation, de l'appareil mobile (1) dans un système de coordonnées tridimensionnel de l'environnement (10), le bloc (210) représente un élément de volume de l'environnement (10) avec un agencement tridimensionnel des valeurs cartographiques (212).

9. Système à capteur d'environnement (10) pour un appareil (1) mobile dans un environnement (10),
comprenant un capteur d'environnement (110) et un système de détermination de position (120) pour déterminer une position de l'appareil mobile (1) à partir de valeurs de mesure de distance (114) du capteur d'environnement (110) selon l'une des revendications précédentes.

10. Système à capteur d'environnement (100) selon la revendication 9,
dans lequel le système de détermination de position (120) est intégré dans un boîtier (112) du capteur d'environnement (110),
le système de détermination de position (120) est réalisé pour émettre la position de l'appareil mobile (1) en tant que valeur de sortie (126) du système à capteur d'environnement (100).

11. Appareil mobile (1), en particulier véhicule de transport sans conducteur, comportant un système à capteur d'environnement (100) selon l'une des revendications 9 à 10.
